# EUROPEAN PATENT SPECIFICATION

(11) **EP 1 121 778 B1**
(45) Date of publication and mention of the grant of the patent: **15.06.2016**
(21) Application number: 99950788.2
(22) Date of filing: 14.10.1999
(51) Int. Cl.: H04L 9/32

(54) **METHOD AND SYSTEM FOR THE APPLICATION OF A SAFETY MARKING**
VERFAHREN UND VORRICHTUNG ZUM ANBRINGEN EINER SICHERHEITSMARKIERUNG
PROCEDE ET APPAREIL DE MISE EN PLACE D'UN MARQUAGE DE SECURITE

(30) Priority: 14.10.1998 FI 982232
(43) Date of publication of application: 08.08.2001
(73) Proprietor: TeliaSonera Finland Oyj, 00510 Helsinki (FI)
(72) Inventor: VATANEN, Harri, Windsor,Berkshire SL4 3HJ (GB)
(74) Representative: Papula Oy
(86) International application number: PCT/FI1999/000851
(87) International publication number: WO 2000/022769

(56) References cited:
- WO-A1-97/15032
- WO-A1-98/32093
- WO-A1-98/38567
- US-A- 5 280 527
- US-A- 5 742 685
- US-A- 5 787 186
- US-A- 5 790 668
- US-A- 5 956 409
- US-A- 5 984 366

## Description

### FIELD OF THE INVENTION

The present invention relates to an electronic safety marking. In particular, the present invention concerns a new and improved method and system for the application of a safety marking in an electric form for marking objects and devices.

### BACKGROUND OF THE INVENTION

The safety marking is used for the marking of objects, devices and information in order to protect them against theft and misuse. The safety marking may consist of the owner's social security number or name or some other piece of information, engraved on the device and identifying the owner of the device. However, this is difficult to implement as engraving or a corresponding physical marking method may damage the device to be marked and the marking often looks unaesthetic.

The safety marking may also be based on biometric data, such as, for example, the DNA, finger print or data obtained from the eye, in which case the person's identity can be more reliably ascertained. On the other hand, for example, cloned individuals have identical DNA but different finger prints. The accuracy of identification can be further improved by combining different identifying factors independent of each other. The DNA of a human being can be formed in 2⁴⁴ ≈ 1,76 * 10¹³ different ways. Correspondingly, the number of inhabitants on the earth is of the order of about 10¹⁰. By combining the DNA with the finger print independent of it and, for example, the PIN code used in mobile communication devices, the number of different combinations will be 10²⁹.

At present, objects can also be marked with an electric or electronic safety marking based on the idea of marking objects with a small coded safety chip containing marking data that can only be read using special reading apparatus. A system of this nature is based on transponder technology used in conjunction with almost invisible chips. The chips are generally passive, so they cannot be reprogrammed, which is why they cannot be forged and are not sensitive to electromagnetic radiation. To apply an electronic safety marking, the customer buys a safety marking from an authorized dealer. The dealer installs a microchip in the object to be marked, whereupon the marking is registered, using a register card, in a database maintained by a third party.

When a stolen object provided with a safety marking is found, the information contained in the chip is read by means of a special reading apparatus. This information is compared with the third party database to determine the right owner of the object. However, such an arrangement requires a special registration database which has to be maintained and is therefore difficult to use. Moreover, the reading apparatus or the information read may be modified or manipulated before the database query. Consequently, the system cannot be fully relied on.

Publication US 5,742,685 discloses an identification card and method and apparatus for producing and authenticating such an identification card. A person whom the identification card will identify, is scanned to produce a digital signal which is compressed, encrypted, and coded as a two dimensional barcode or as some other appropriate form of coding, which is incorporated into one portion of the identification card.

The object of the invention is to eliminate the problems referred to above.

A specific object of the invention is to disclose a new type of method and system for electronic marking of objects, devices or information. The object of the invention is to simplify the identification of marked equipment and to achieve a system that is absolutely reliable.

The invention concerns a method for identifying a safety marking, in which method a safety marking is used to mark objects, devices or information by attaching the safety marking in electric form to them. The method comprises reading the safety marking into the identification device. The method is characterized by obtaining a personal identification code from a user of an identification device, enabling the use of a personal decryption key stored in the memory of the identification device in response to the obtaining of the personal identification code; and decoding the safety marking using the personal decryption key to obtain personal information contained in the safety marking.

In an embodiment of the invention, the safety marking is read into an identification device and decoded in order to obtain the information contained in it. This information may include personal owner identification data, such as name, social security number, etc. In connection with this information, it is also possible to apply, for example, a PIN code (PIN, Personal Identity Number), which makes it possible to form an electronic signature. The PIN code to be used can be implemented either in the mobile station or in the SIM card. The PIN code and its length can be so defined that they fit the application, and, in an embodiment, the user can change it at will.

In an embodiment of the invention, the safety marking is produced by forming a first string of predetermined form from personal or other identification data. This predetermined form may be, for example, the binary form, which can be readily handled by a microprocessor. The first string is encrypted with a first key, thus encrypting information as to what personal data have been used to form the safety marking. The string is signed electrically. After this, the string is encrypted in a marking device using , for example, the user's public key to generate and encrypted string. The marking device preferably contains two encryption keys.

The user's public key in the marking device is unknown to the world outside. Therefore, the identification data remain concealed, thus affording privacy protection to the user of the safety marking. The encrypted string is stored in an electric form in the marking device, which is attached to the object or product to be marked.

To decrypt the safety marking, the encrypted string is read into an identification device comprising means for decrypting the encrypted string. The identification device also contains a decryption key to which only the owner and user of the safety marking has an access right. In practice, the access right consists of a password for the decryption key" for example, a PIN code or some other corresponding code, by means of which the decryption key can be used. The user may send this decryption key likewise in an encrypted form such that a reliable third party" for example, the police, will be able to decrypt it and use this key , for example, for the identification of the safety marking.

The personal data preferably comprise a biometric sample of the owner of the safety marking. The biometric sample may be the DNA code, which is stored in the safety marking in a predetermined form. The biometric sample may also consist of a finger print or a picture of the retina or iris of the eye of the user of the safety marking. From these samples, a graphic representation is generated and encoded into a suitable form" for example, binary form, so that it can be encrypted using a known encryption method.

When a biometric sample is included in the personal data, this provides a double safety check for the verification of the owner of the safety marking. When a user claiming to be the owner of a safety marking gives a password with which the safety marking can be decrypted and the user's personal details obtained, then a first check has been carried out as the password for the decryption key is specific to the user and/or person. After this, the user can be associated with the safety marking by taking of him/her a sample corresponding to that contained in the safety marking. For example, if a DNA code contained in the safety marking corresponds to the DNA code determined from the user, then this is irrefutable proof that the safety marking belongs to the person in question.

Included in the safety marking are also the owner's personal details for individualizing the safety marking and obtaining authenticity of the owner.

The invention concerns also a system for the application of a safety marking used to mark objects and devices by attaching the safety marking to them in an electric form, said system comprising an identification device, which comprises a reading device for reading the safety marking and a processor for processing the safety marking, wherein the system comprises means for reading the safety marking into the identification device. The system is characterized in that the system further comprises: means for obtaining a personal identification code from a user of an identification device; means for enabling the use of a personal decryption key stored in the memory of the identification device in response to the obtaining of the personal identification code; and means for decoding the safety marking using the personal decryption key to obtain personal information contained in the safety marking.

In an embodiment of the invention, the system of the invention for the application of a safety marking used to mark objects and equipment by providing them with a safety marking in an electric form comprises an identification device comprising a reading device for the reading of an identification symbol and a processor for the processing of the identification symbol. The identification device may be any known device capable of reading a safety marking stored in an electric form. Moreover, the properties of the identification device are largely determined on the basis of the form of storage of the safety marking. As the safety marking can be stored in many different forms, such as graphic, bar code, binary or equivalent forms, the reading device may also have many different properties, respectively.

In an embodiment of the invention, , the system comprises means for generating a first string from personal data in a predetermined form. In addition, the system comprises means for encrypting the first string with the user's public key to form an encrypted string. The means for generating a string and the means for encrypting the string may be located, for example, in a computer or an equivalent device, into which the personal data is supplied and which is used to form the safety marking. Moreover, the system comprises a marking device for storing the encrypted string in an electric form. The encrypted string is fed into the marking device in a predetermined form. Furthermore, the system comprises means for decrypting the encrypted string using a decryption key provided in the identification device.

The invention concerns also an identification device for identifying a safety marking, the identification device comprising: means for reading the safety marking into the identification device. The identification device is characterized by means for obtaining a personal identification code from a user of the identification device; means for enabling the use of a personal decryption key stored in the memory of the identification device in response to the obtaining of the personal identification code; and means for decoding the safety marking using the personal decryption key to obtain personal information contained in the safety marking.

In a preferred embodiment, the marking device comprises a storage device and a first interface for linking the marking device with the reading device. The identification device may consist of a safety module which comprises a second interface for setting up a connection with the marking device. In a preferred embodiment, the first and second interfaces are implemented using Bluetooth technology.

As compared with prior art, the present invention has the advantage that it guarantees a reliable and safe arrangement for the application of a safety marking in an electric form. In addition, the invention significantly simplifies the use of a safety marking in an electric form because it does not require the use of a separate registration database.

A further advantage of the invention as compared with prior-art technology is that the invention allows double verification of the authenticity of the owner of the safety marking. This often produces a complete certainty as to who is the owner of the safety marking. The procedure of the invention also affords privacy protection to the user of the safety marking as deciphering the information contained in the safety marking is very difficult, depending on the encryption algorithm used.

### LIST OF ILLUSTRATIONS

In the following, the invention will be described by the aid of a few examples of its preferred embodiments with reference to the attached drawing, in which
Fig. 1 presents an identification device according to the present invention,
Fig. 2 presents a preferred marking device according to the present invention, and
Fig. 3 presents a flow diagram representing a preferred identification method according to the present invention.

### DETAILED DESCRIPTION OF THE INVENTION

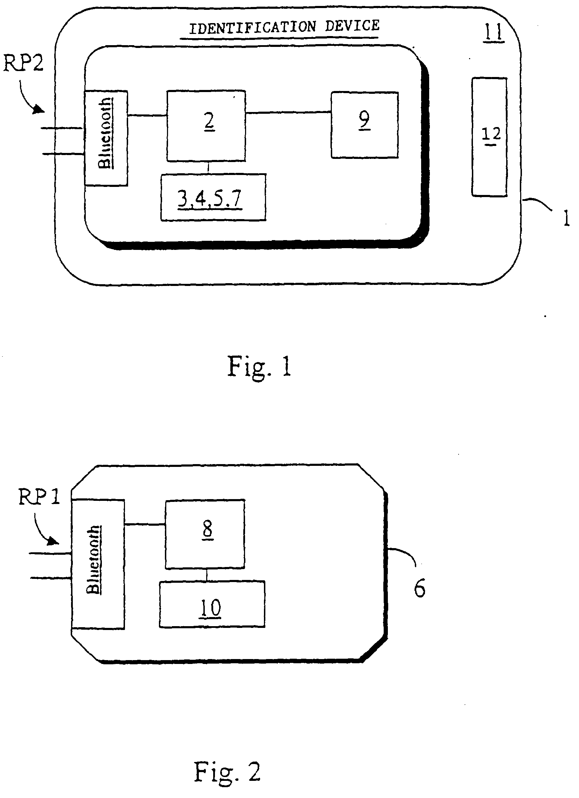

Fig. 1 presents a preferred identification device 1. The identification device comprises a second interface RP1 for linking it to a marking device 6. In addition, the identification device comprises encryption and decryption means 5, 7 for decrypting the information to be stored in the marking device 6 and decrypting the encrypted information to be read by means of the marking device.

Furthermore, the decryption means presented in Fig. 1 comprise a processor 3, which can be designed and optimized specially for encryption functions and which encrypts and decrypts and implements an electric signature, and a storage 9, which is connected to the processor for storing the keys and parameters it needs. The information stored in the storage 9 may include the personal decryption key of the user of the safety module, parameters of the encryption algorithm and other data needed. A preferred example of the encryption algorithm used in this invention is the RSA method, but other unsymmetrical or symmetrical algorithms can also be used, depending on the application.

The frame 11 of the identification device has been designed to fit the shapes of the power source of a mobile station. The frame 11 is provided with a connector 12 for connecting the identification device to the mobile telephone. The connector 12 also serves to connect the power and communication between the identification device and the mobile station. In this embodiment, the power source of the identification device has a capacity substantially corresponding to the power source of the mobile station and is also chargeable. Therefore, the identification device can be easily connected to the mobile station both mechanically and electrically.

The marking device presented in Fig. 2 comprises a storage device 8 and a first interface RP1 for connecting the marking device to an external device, for example, an identification device. The marking device 6 may preferably be a commonly used marking device known as such based on transponder technology.

Via the first and second interfaces RP1, RP2, the identification device 1 can be connected to the marking device 6 using a wireless or physical link to allow data transfer between them. The encrypted string can be transferred into the marking device 6 by means of the identification device or in conjunction with the manufacture of the marking device. The encrypted string can be read by means of the identification device or a corresponding device provided with the required reading means. A device like this could be, for example, a safety module as described in patent specification FI 981902. In conjunction with the interfaces RP1, RP2, it is possible to provide a so-called Bluetooth component, although this is not shown in Fig. 1 and 2. The Bluetooth component is used to implement the functions required by the technology in question. The interfaces RP1, RP2 can be implemented using any optical infrared link, radio link or a known bus interface.

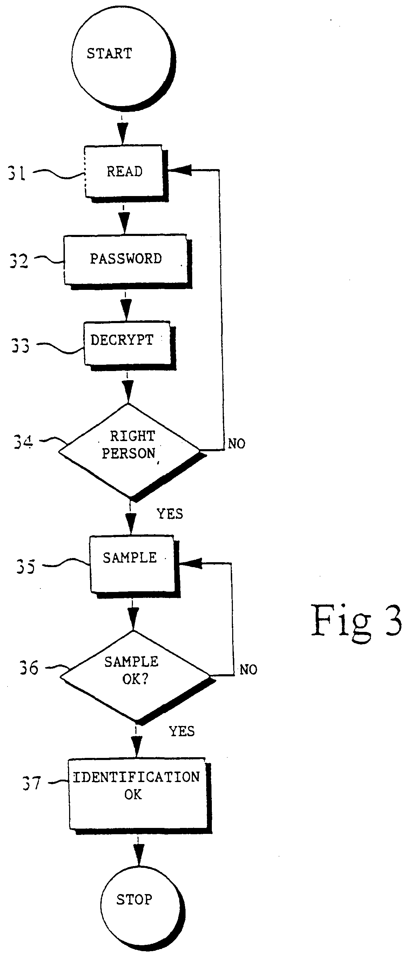

Fig. 3 illustrates a preferred identification method according to the invention. When an object or device provided with a marking device is to be identified, the information stored in the marking device 6 is read by means of the identification device 1, block 31. The reading may be achieved via a wireless connection or the identification device may be physically attached to the marking device. After the information has been read into the identification device, the user's personal password is fed into the identification device, enabling the use of the personal decryption key stored in the identification device, block 32. This is the first check for verifying the owner of the marking device. Only the owner of the marking device is in possession of the decryption key to be used in decrypting the encrypted string stored in the marking device.

Once the user has given the key, the encrypted string is decrypted by the identification device 1, block 33. The person's identity is verified against the decrypted string thus obtained, and if it corresponds to the identity declared by the person, then the process goes on to block 35, and if not, then the reading and encrypting operations can be repeated, , for example, three times, returning to block 31. In block 35, if a further check is to be carried out to verify that the person is actually the individual he/she is claiming to be, a biometric sample is taken from the person and the sample is compared with the sample information stored in the marking device. If the sample is all right, then the person's identity has been established with nearly absolute certainty and likewise that the marking device belongs to the person in question. This process of comparing the sample may also be repeated, for example, three times to make sure that a failure of the test has not been caused by a technical fault.

The invention makes it possible to implement reliable identification locally without having to establish a connection with a separate database to verify the correctness of an identifier. Especially when electronic identification becomes more widespread, a situation is likely to arise where several databases are used for identity checks, which may impair identity protection.

In a case described as an example, a first string is formed from personal data about the user. The first string comprises, for example, the DNA code and finger print information both converted into digital form. The string thus formed is encrypted by the RSA 1024 method using the user's secret encryption key, so that it will not be possible to determine from the string thus generated what part or parts of the body is/are the origin of the biometric data. The string is signed electrically and encrypted using a public key. The identifier thus produced is incorporated in the product to be' encrypted.

The safety marking can be checked, for example, by means of an identification device attached to a mobile station, in which case the user's right to the marked object or information can be proved by means of the mobile station. Electronic information can be easily incorporated, for example, in data stored in digital form. For instance, on a CD disk which contains a large amount of redundant information, it is possible to hide an identifier that is hard to detect and is only found as the output of an appropriate function. The safety marking embedded in the information can not be altered as it is not visible from outside. The safety marking can be read, for example, by a verification reading method, the desired safety marking being obtained as an output for certain information. In this way, it is possible to verify, for example, copyright data regarding electronic information, in other words, to mark electronic information in the name of a given person, corporation or community.

The present invention is not restricted to the examples described above, but many variations are possible within the scope of protection of the inventive idea defined in the claims.

## Claims

1. Method for identifying a safety marking, in which method a safety marking is used to mark objects, devices or information by attaching the safety marking in electric form to them, the method comprising:
reading the safety marking into the identification device,
**characterized by**
obtaining a personal identification code from a user of an identification device;
enabling the use of a personal decryption key stored in the memory of the identification device in response to the obtaining of the personal identification code; and
decoding the safety marking using the personal decryption key to obtain personal information contained in the safety marking.

2. Method as defined in claim 1, **characterized in that** the safety marking is generated by
forming from personal data a first string in a predetermined form;
signing the first string electrically;
encrypting the signed first string to form an encrypted string;
the encrypted string is stored in electric form in a marking device.

3. Method as defined in claim 1 or 2, **characterized in that** the personal data comprise a biometric sample of the owner of the safety marking.

4. Method as defined in any one of claims 1 - 3, **characterized in that** the biometric sample comprises the DNA code of the owner of the safety marking in a predetermined form.

5. Method as defined in any one of claims 1 - 3, **characterized in that** the biometric sample comprises a fingerprint specimen of the owner of the safety marking in a predetermined form.

6. Method as defined in any one of claims 1 - 3, **characterized in that** the biometric sample comprises an image of the eye of the owner of the safety marking in a predetermined form.

7. Method as defined in any one of claims 1 - 6, **characterized in that** the biometric sample is in binary form.

8. Method as defined in any one of claims 1 - 7, **characterized in that**, to individualize the safety marking, the personal details regarding its owner are included in the safety marking.

9. A system for the application of a safety marking used to mark objects and devices by attaching the safety marking to them in an electric form, said system comprising an identification device (1), which comprises a reading device (2) for reading the safety marking and a processor (3) for processing the safety marking, wherein the system comprises
means for reading the safety marking into the identification device,
**characterized in that** the system further comprises:
means for obtaining a personal identification code from a user of an identification device;
means for enabling the use of a personal decryption key stored in the memory of the identification device in response to the obtaining of the personal identification code; and
means for decoding the safety marking using the personal decryption key to obtain personal information contained in the safety marking

10. System according to claim 9, **characterized in that** the system further comprises
means (4) for forming a first string from personal data in a predetermined form;
means (5) for encrypting the first string using the user's public key to generate an encrypted string; and
a marking device (6) for storing the encrypted string in an electric form.

11. System as defined in claim 10, **characterized in that** the marking device (6) comprises a storage device (8) and a first interface (RP1) for connecting the marking device to the reading device (2).

12. System as defined in claim 9 or 10, **characterized in that** the identification device (1) is a safety module.

13. System as defined in any one of the preceding claims 9 - 11, **characterized in that** the safety module (1) comprises a second interface (RP2) for establishing a connection to the marking device.

14. An identification device for identifying a safety marking, the identification device comprising: means for reading the safety marking into the identification device,
**characterized by**
means for obtaining a personal identification code from a user of the identification device;
means for enabling the use of a personal decryption key stored in the memory of the identification device in response to the obtaining of the personal identification code; and
means for decoding the safety marking using the personal decryption key to obtain personal information contained in the safety marking.

## Patentansprüche

1. Verfahren zum Identifizieren einer Sicherheitsmarkierung, wobei bei dem Verfahren eine Sicherheitsmarkierung zur Markierung von Objekten, Vorrichtungen oder Informationen verwendet wird, indem die Sicherheitsmarkierung in elektrischer Form an dieser angebracht wird, wobei das Verfahren Folgendes umfasst:
Einlesen der Sicherheitsmarkierung in die Identifizierungsvorrichtung,
**gekennzeichnet durch**
Erhalten eines persönlichen Identifizierungscodes von einem Benutzer einer Identifizierungsvorrichtung;
Ermöglichen der Verwendung eines persönlichen Dechiffrierungsschlüssels, der in dem Speicher der Identifizierungsvorrichtung gespeichert ist, in Antwort auf den Erhalt des persönlichen Dechiffrierungscodes; und
Decodieren der Sicherheitsmarkierung unter Verwendung des persönlichen Dechiffrierungsschlüssels, um persönliche Informationen zu erhalten, die in der Sicherheitsmarkierung enthalten sind.

2. Verfahren nach Anspruch 1, **dadurch gekennzeichnet, dass** die Sicherheitsmarkierung erzeugt wird durch
Bilden eines ersten Strings in einer vorherbestimmten Form aus persönlichen Daten;
elektrisches Unterzeichnen des ersten Strings;
Chiffrieren des unterzeichneten ersten Strings zum Bilden eines chiffrierten Strings;
der chiffrierte String wird in elektrischer Form in einer Markierungsvorrichtung gespeichert.

3. Verfahren nach Anspruch 1 oder 2, **dadurch gekennzeichnet, dass** die persönlichen Daten eine biometrische Probe des Besitzers der Sicherheitsmarkierung umfassen.

4. Verfahren nach einem der Ansprüche 1 bis 3, **dadurch gekennzeichnet, dass** die biometrische Probe den DNA-Code des Besitzers der Sicherheitsmarkierung in einer vorbestimmten Form umfasst.

5. Verfahren nach einem der Ansprüche 1 bis 3, **dadurch gekennzeichnet, dass** die biometrische Probe eine Fingerabdruckprobe des Besitzers der Sicherheitsmarkierung in einer vorbestimmten Form umfasst.

6. Verfahren nach einem der Ansprüche 1 bis 3, **dadurch gekennzeichnet, dass** die biometrische Probe ein Bild des Auges des Besitzers der Sicherheitsmarkierung in einer vorbestimmten Form umfasst.

7. Verfahren nach einem der Ansprüche 1 bis 6, **dadurch gekennzeichnet, dass** die biometrische Probe in binärer Form vorliegt.

8. Verfahren nach einem der Ansprüche 1 bis 7, **dadurch gekennzeichnet, dass** die persönlichen Details bezüglich ihres Besitzers in der Sicherheitsmarkierung enthalten sind, um die Sicherheitsmarkierung zu individualisieren.

9. System zur Anwendung einer Sicherheitsmarkierung, die verwendet wird, um Objekte und Vorrichtungen durch das Anbringen der Sicherheitsmarkierung in einer elektrischen Form an ihnen zu markieren, wobei das System eine Identifizierungsvorrichtung (1) umfasst, die eine Lesevorrichtung (2) zum Lesen der Sicherheitsmarkierung und einen Rechner (3) zur Verarbeitung der Sicherheitsmarkierung umfasst, wobei das System Mittel zum Einlesen der Sicherheitsmarkierung in der Identifizierungsvorrichtung umfasst,
**dadurch gekennzeichnet, dass** das System ferner umfasst:
Mittel zum Erhalten eines persönlichen Identifizierungscodes von einem Benutzer einer Identifizierungsvorrichtung;
Mittel zum Ermöglichen der Verwendung eines persönlichen Dechiffrierungsschlüssels, der in dem Speicher der Identifizierungsvorrichtung gespeichert ist, in Antwort auf den Erhalt des persönlichen Identifizierungscodes; und
Mittel zum Decodieren der Sicherheitsmarkierung unter Verwendung des persönlichen Dechiffrierungsschlüssels zum Erhalten der persönlichen Information, die in der Sicherheitsmarkierung enthalten ist.

10. System nach Anspruch 9, **dadurch gekennzeichnet, dass** das System ferner umfasst:
Mittel (4) zur Bildung eines ersten Strings aus persönlichen Daten in einer vorherbestimmten Form;
Mittel (5) zum Chiffrieren des ersten Strings unter Verwendung des öffentlichen Schlüssels des Benutzers, um einen chiffrierten String zu erzeugen; und
eine Markierungsvorrichtung (6) zum Speichern des chiffrierten Strings in einer elektrischen Form.

11. System nach Anspruch 10, **dadurch gekennzeichnet, dass** die Markierungsvorrichtung (6) eine Speichervorrichtung (8) und eine erste Schnittstelle (RP1) zum Verbinden der Markierungsvorrichtung mit der Lesevorrichtung (2) umfasst.

12. System nach Anspruch 9 oder 10, **dadurch gekennzeichnet, dass** die Identifizierungsvorrichtung (1) ein Sicherheitsmodul ist.

13. System nach einem der vorangehenden Ansprüche 9 bis 11, **dadurch gekennzeichnet, dass** das Sicherheitsmodul (1) eine zweite Schnittstelle (RP2) zum Herstellen einer Verbindung mit der Markierungsvorrichtung umfasst.

14. Identifizierungsvorrichtung zum Identifizieren einer Sicherheitsmarkierung, wobei die Identifizierungsvorrichtung umfasst:
Mittel zum Einlesen der Sicherheitsvorrichtung in die Identifizierungsvorrichtung,
**gekennzeichnet durch**
Mittel zum Erhalten eines persönlichen Identifizierungscodes eines Benutzers einer Identifizierungsvorrichtung;
Mittel zum Ermöglichen der Verwendung eines persönlichen Dechiffrierungsschlüssels, der im Speicher der Identifizierungsvorrichtung in Antwort auf den persönlichen Identifizierungscode gespeichert ist; und
Mittel zum Decodieren der Sicherheitsmarkierung unter Verwendung des persönlichen Dechiffrierungsschlüssels zum Erhalten der persönlichen Informationen, die in der Sicherheitsmarkierung enthalten sind.

## Revendications

1. Procédé pour identifier un marquage de sécurité, dans lequel procédé un marquage de sécurité est utilisé pour marquer des objets, des dispositifs ou des informations en y fixant le marquage de sécurité sous forme électrique, le procédé comprenant le fait :
de lire le marquage de sécurité dans le dispositif d'identification,
**caractérisé par** le fait
d'obtenir un code d'identification personnel à partir d'un utilisateur d'un dispositif d'identification ;
de permettre l'utilisation d'une clé de décryptage personnelle stockée dans la mémoire du dispositif d'identification en réponse à l'obtention du code d'identification personnel ; et
de décoder le marquage de sécurité en utilisant la clé de décryptage personnelle pour obtenir des informations personnelles contenues dans le marquage de sécurité.

2. Procédé tel que défini dans la revendication 1, **caractérisé en ce que** le marquage de sécurité est généré par le fait
de former à partir de données personnelles une première chaîne sous une forme prédéterminée ;
de signer la première chaîne électriquement ;
de crypter la première chaîne signée pour former une chaîne cryptée ;
la chaîne cryptée est stockée sous forme électrique dans un dispositif de marquage.

3. Procédé tel que défini dans la revendication 1 ou 2, **caractérisé en ce que** les données personnelles comprennent un échantillon biométrique du propriétaire du marquage de sécurité.

4. Procédé tel que défini dans l'une quelconque des revendications 1 à 3, **caractérisé en ce que** l'échantillon biométrique comprend le code ADN du propriétaire du marquage de sécurité sous une forme prédéterminée.

5. Procédé tel que défini dans l'une quelconque des revendications 1 à 3, **caractérisé en ce que** l'échantillon biométrique comprend un spécimen d'empreinte digitale du propriétaire du marquage de sécurité sous une forme prédéterminée.

6. Procédé tel que défini dans l'une quelconque des revendications 1 à 3, **caractérisé en ce que** l'échantillon biométrique comprend une image de l'oeil du propriétaire du marquage de sécurité sous une forme prédéterminée.

7. Procédé tel que défini dans l'une quelconque des revendications 1 à 6, **caractérisé en ce que** l'échantillon biométrique est sous forme binaire.

8. Procédé tel que défini dans l'une quelconque des revendications 1 à 7, **caractérisé en ce que**, pour individualiser le marquage de sécurité, les détails personnels concernant son propriétaire sont inclus dans le marquage de sécurité.

9. Système pour l'application d'un marquage de sécurité utilisé pour marquer des objets et des dispositifs en y fixant le marquage de sécurité sous une forme électrique, ledit système comprenant un dispositif d'identification (1), qui comprend un dispositif de lecture (2) pour lire le marquage de sécurité et un processeur (3) pour traiter le marquage de sécurité, où le système comprend
un moyen pour lire le marquage de sécurité dans le dispositif d'identification,
**caractérisé en ce que** le système comprend en outre :
un moyen pour obtenir un code d'identification personnel à partir d'un utilisateur d'un dispositif d'identification ;
un moyen pour permettre l'utilisation d'une clé de décryptage personnelle stockée dans la mémoire du dispositif d'identification en réponse à l'obtention du code d'identification personnel ; et
un moyen pour décoder le marquage de sécurité en utilisant la clé de décryptage personnelle afin d'obtenir des informations personnelles contenues dans le marquage de sécurité.

10. Système selon la revendication 9, **caractérisé en ce que** le système comprend en outre
un moyen (4) pour former une première chaîne à partir de données personnelles sous une forme prédéterminée ;
un moyen (5) pour crypter la première chaîne en utilisant une clé publique de l'utilisateur afin de générer une chaîne cryptée ; et
un dispositif de marquage (6) pour stocker la chaîne cryptée sous une forme électrique.

11. Système tel que défini dans la revendication 10, **caractérisé en ce que** le dispositif de marquage (6) comprend un dispositif de stockage (8) et une première interface (RP1) pour connecter le dispositif de marquage au dispositif de lecture (2).

12. Système tel que défini dans la revendication 9 ou 10, **caractérisé en ce que** le dispositif d'identification (1) est un module de sécurité.

13. Système tel que défini dans l'une quelconque des revendications précédentes 9 à 11, **caractérisé en ce que** le module de sécurité (1) comprend une deuxième interface (RP2) pour établir une connexion avec le dispositif de marquage.

14. Dispositif d'identification pour identifier un marquage de sécurité, le dispositif d'identification comprenant : un moyen pour lire le marquage de sécurité dans le dispositif d'identification,
**caractérisé par**
un moyen pour obtenir un code d'identification personnel à partir d'un utilisateur du dispositif d'identification ;
un moyen pour permettre l'utilisation d'une clé de décryptage personnelle stockée dans la mémoire du dispositif d'identification en réponse à l'obtention du code d'identification personnel ; et
un moyen pour décoder le marquage de sécurité en utilisant la clé de décryptage personnelle afin d'obtenir des informations personnelles contenues dans le marquage de sécurité.
